# EUROPEAN PATENT SPECIFICATION

(11) **EP 3 153 309 B1**
(45) Date of publication and mention of the grant of the patent: **12.12.2018**
(21) Application number: 15382483.4
(22) Date of filing: 05.10.2015
(51) Int. Cl.: B29C 73/12, B25H 1/08, B25H 1/10, B29C 73/26

(54) **SYSTEM FOR OUT OF AUTOCLAVE BONDED REPAIRS**
SYSTEM FÜR REPARATUREN AUSSERHALB DES AUTOKLAVEN
SYSTÈME DE RÉPARATIONS LIÉES HORS AUTOCLAVE

(43) Date of publication of application: 12.04.2017
(73) Proprietor: Airbus Operations S.L., 28906 Getafe (ES)
(72) Inventor: RODRIGUEZ BELLIDO, Ana, 28906 Getafe (ES); SANCHEZ GOMEZ, Jose, 28906 Getafe (ES); AVILA DOMINGUEZ, Rafael, 28906 Getafe (ES); VILA PAPELL, Enric, 28906 Getafe (ES); ANGUIANO ZARRANZ, Rebeca, 28906 Getafe (ES); FORCEN CARVALHO, Juan Ignacio, 28906 Getafe (ES)

(56) References cited:
- WO-A1-2015/079124
- DE-A1- 3 923 785
- US-A- 5 207 541
- US-A- 5 975 183
- US-A1- 2011 259 515
- US-A1- 2015 090 392

## Description

### TECHNICAL FIELD

The present disclosure relates to machines for repairing damaged parts made of composite materials by removing damaged parts in an out of autoclave procedure.

### BACKGROUND

Aircraft composite structures may have damages areas due to the impact of strikes that have to be repaired.

Up to date there are several technologies for repairing composite parts. The repairing process has to comprise steps for removing the parts and steps for restoring the removed part by a composite patch that may be bonded to the structure.

For out of autoclave bonded repair there are known several process as Mechanical milling, Water jet or Laser techniques.

EP2442941 describes a method for restoring a composite structure by removing a volume of composite material layer by layer and pausing the machine after the removal of the layer for scanning the area and replacing the volume of the structure, however there are still the need of designing a machine able to both remove and restore the damaged part in situ in order to reduce to the maximum the handling of the composite parts.

DE 39 23 785 A1 describes a movable structure for repairing a composite structure.

### SUMMARY OF THE INVENTION

The present invention solves the above-mentioned drawbacks of the prior art, by providing a system for out of autoclave in-service and production bonded repairs which comprises three parts, which are:
- a fixing structure to the composite damaged area to be repaired, comprising:
   ∘ a frame and
   ∘ fixing parts attached to the frame,
- a movable structure comprising:
   ∘ a first routable shaft connected to a first engine configured to rotate the first shaft and attached to two fixing means,
   ∘ a tooling support attached to the first routable shaft comprising:
      ▪ a second routable shaft connected to a second engine configured to rotate the second shaft and
      ▪ either a scanning tool, a milling tool, a patch cutting tool or a composite patch handle tool attached to the second routable shaft, and
   ∘ two fixing structures comprising each one two fixing parts linked each other through a third routable shaft connected to a third engine configured to rotate the third shaft been the fixing parts configured to be attached either to the frame of the fixing structure to the damaged part or to the patch manufacturing structure,
   so that each three routable shafts are oriented in the three axes X, Y, Z respectively according to the cartesian coordinate system for a three-dimensional space in order to move the tooling in the three axes X, Y and Z,
- a patch manufacturing structure which comprises:
   ∘ preferably a bench comprising platform displacement rails configured to move the platform from one side to the other of the bench,
   ∘ fixing means for fixing the movable structure to the bench,
   ∘ preferably a platform for laying up composite layers comprising attaching means to the displacement means of the bench,
   ∘ Optionally resin mould located over the bench and opposite to the platform and displacement mechanisms attached to the bench able to move the mould up and down in order to manufacture in situ a curved mould in case of curved damaged parts.

The method for removing and restoring damaged part of a composite structure by the above described machine comprises the following main steps:
1) Scan the damaged area:
2) Remove the damage area
3) Manufacture the patch equal to the mechanized area
4) Move the manufactured patch into the mechanized area of the part.

### BRIEF DESCRIPTION OF THE DRAWINGS

Preferred embodiments of the invention are henceforth described with reference to the accompanying drawings, wherein:
Figure 1 shows a front view of the fixing structure fixed to the part to be repaired.
Figure 2 shows a front view of the movable structure.
Figure 3 shows a front view of the movable structure with a scanning tool attached to the tooling support.
Figure 4 shows a front view of a scanning tool.
Figure 5 shows a front view of a milling tool
Figure 6 shows a front view of the movable structure with the milling tool
Figure 7 shows a perspective view of the patch manufacturing bench.
Figure 8 shows lateral view of figure 7.
Figure 9 shows a front view of figure 7.
Figure 10 shows a perspective view of the patch manufacturing bench with the movable structure and the mould in position "up"
Figure 11 shows a front view of the patch manufacturing bench with the movable structure with the cutting tool in the tooling support and the mould in position "up"
Figure 12 shows a perspective view of figure 11
Figure 13 shows a front view of the patch manufacturing bench with the movable structure and the movable mould in position down and the platform moved to the other side of the bench and over the mould.
Figure 14 shows a perspective view of figure 13.
Figure 15 shows a front view of the patch manufacturing bench with the movable structure and the movable mould in position down, the platform over the mould and the handling tool attached to the tooling support.
Figure 16 shows a front view of the patch manufacturing bench with the movable structure, the movable mould in position up and the platform returned to its initial position opposite to the platform
Figure 17 shows a perspective view of figure 16.
Figure 18 shows a front view of the movable structure with the patch handled by the handle tool.
Figure 19 shows a front view of the movable structure with the patch handled by the handle tool attached to the frame of the fixing structure.
Figure 20 shows a front view of the movable structure attached to the frame of the fixing structure wherein the patch has been placed in the mechanized area of the part.

### DETAILED DESCRIPTION OF THE INVENTION

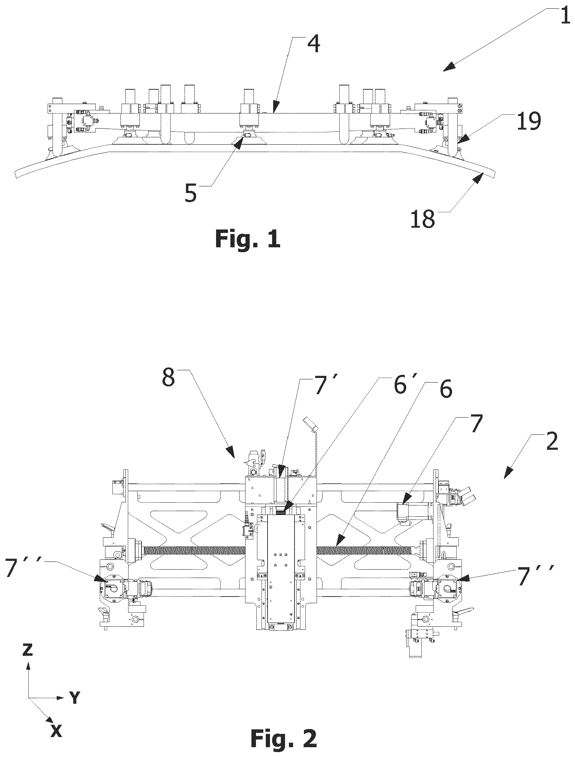

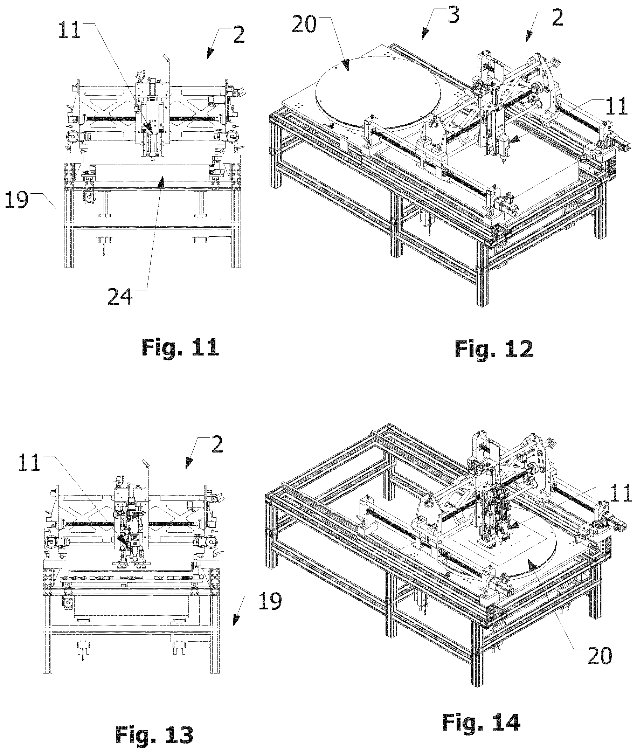

Figures 1-20 shows the system for out of autoclave in-service and production bonded repairs which comprise:
- a fixing structure (1) of the tooling displacement structure (2) to the composite area to be repaired, comprising:
   ∘ a frame (4) and
   ∘ fixing parts (5, 19) attached to the frame (4), comprising vents and counterweights,
- A movable structure (2) comprising:
   ∘ A first routable shaft (6) connected to a first engine (7) configured to rotate the first shaft (6) and attached to two fixing structures (32, 32'),
   ∘ a tooling support (8) attached to the first routable shaft (6) comprising:
      ▪ a second routable shaft (6') connected to a second engine (7') configured to rotate the second shaft (6') and
      ▪ either a scanning tool (9) comprising a dual scanner head, a milling tool (10), a patch cutting tool (11) or a composite patch handle tool (27) attached to the second routable shaft (6'), and
   ∘ Two fixing structures comprising each one two fixing parts linked each other through a third routable shaft (6") connected to a third engine (7") configured to rotate the third shaft (6") been the fixing parts configured to be attached either to the frame (4) of the fixing structure (1) to the damaged part or to the patch manufacturing structure (3),
   so that each three routable shafts (6, 6', 6") are oriented in the three axes X, Y, Z respectively according to the cartesian coordinate system for a three-dimensional space in order to move the tooling (9, 10, 11, 27) in the three axes X, Y and Z,
- a patch manufacturing structure (3) which comprises:
   ∘ a bench (22) comprising platform displacement rails (31, 31') configured to move the platform (20) from one side to the other of the bench (22)
   ∘ fixing parts (23, 23', 23", 23"', 30, 30') for fixing the movable structure (2) to the bench (22),
   ∘ a platform (20) for laying composite layers comprising attaching elements (21) to the platform displacement rails (31, 31') of the bench (22) configured to move along the displacement rails (31, 31'),
   ∘ Optionally, the patch manufacturing structure (3) may comprise a mould (24) located over the bench (22) and opposite to the platform (21) comprising displacement mechanisms (26, 26', 26", 26"') such a vertical rail and an engine attached to the bench (22) able to move the mould (24) up and down.

The mould is a resin mould used in case of curved damaged part in order to be used to manufacture in situ a curved mould through the milling tool (10) of the movable structure (2) according to the 3D scanned image got in the milling step of the damaged area. Once the curved mould is manufactured the composite layers are lay up over the curved mould to be cut through the cutting tool of the movable structure (2) obtaining the desired curved patch.

The method for removing and restoring damaged part of a composite structure in situ out of autoclave by the above described machine comprises the following main steps:
- scan the damaged area,
- remove the scanned damaged area leaving a mechanized area in the composite part to be repaired,
- manufacture a patch equal to the mechanized area,
- lay up the patch over the mechanized area.

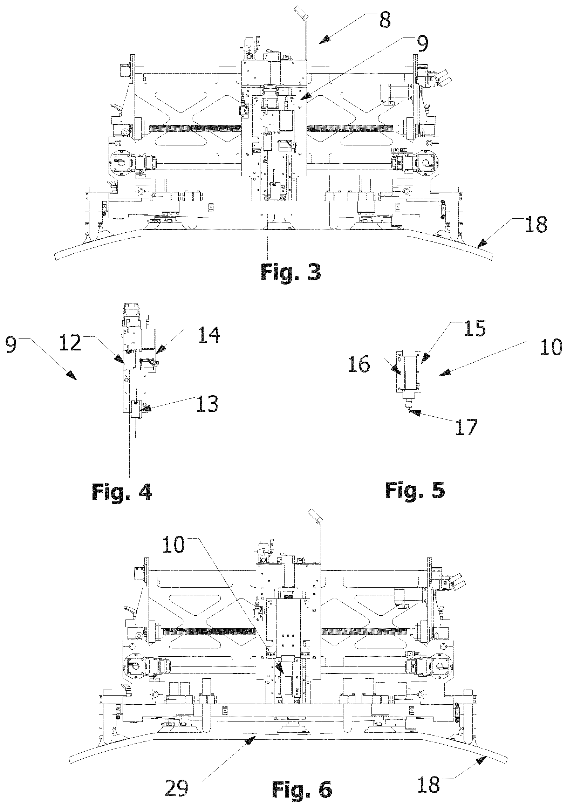

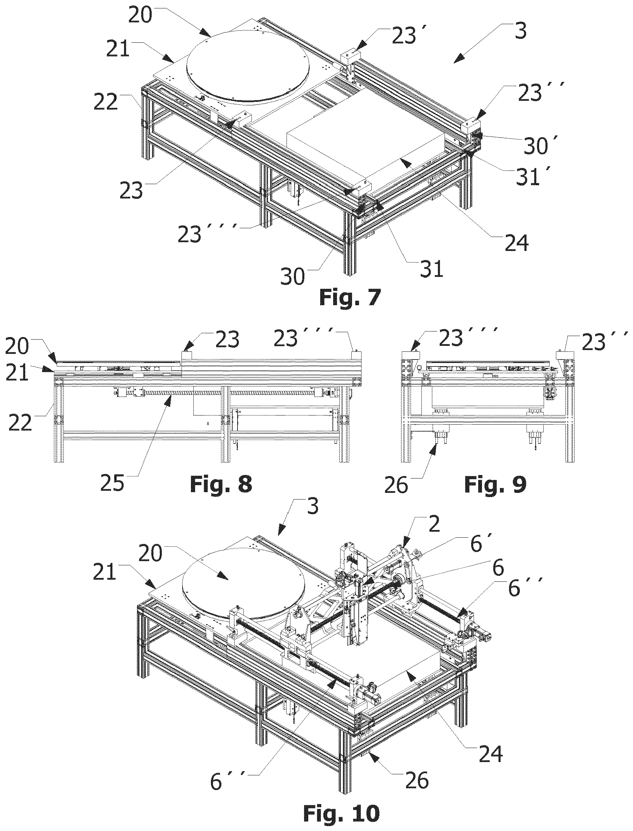

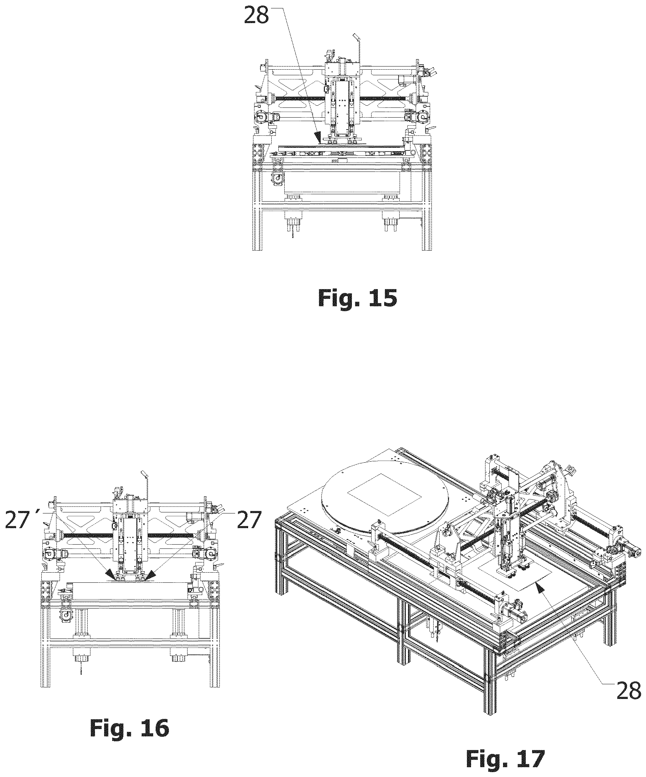

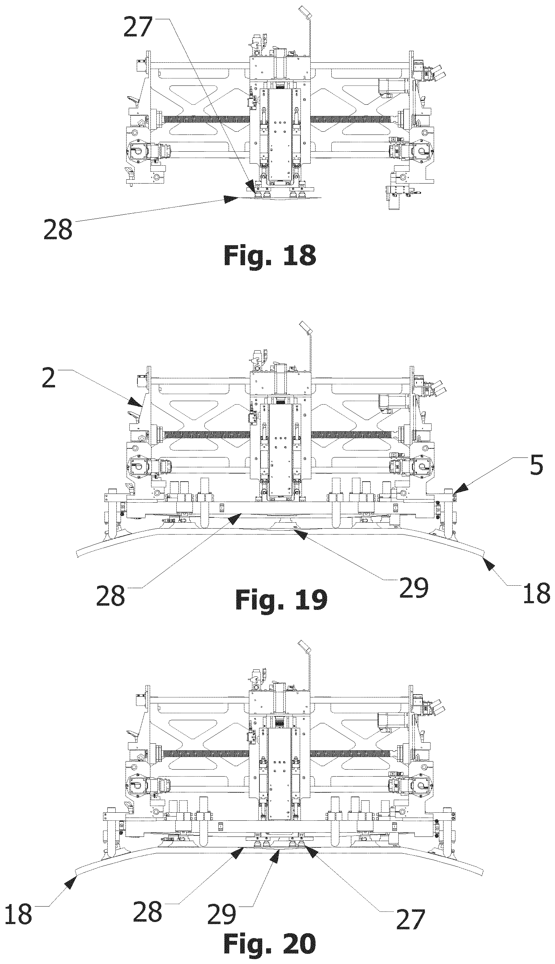

These steps are followed through the system described below in the following steps and substeps:
1) Scan the damaged area, as shown in figures 1-4:
   - Attach the fixing structure (1) to the damaged part by means of vacuum,
   - Assemble the movable structure (2) to the fixing structure (1),
   - Attach a scanning tool (9) comprising a dual laser scanner head (12, 13), to the tooling support of the movable structure,
   - Generate a 3D image of the damaged area with a dual laser scanner head,
2) Remove the damage area, as shown in figures 5-6:
   - Remove the scanning tool (9) and attach a milling tool (10) to the tooling support (8) of the movable structure (2),
   - Remove layers of the damaged area by means of the milling tool (10) generating a mechanized area,
   - Generate a new 3D image of the mechanized area through the scanning tool.
3) Manufacture the patch equal to the mechanized area, as shown in figures 7-14
   - Detach the movable structure (2) from the frame (4) of the fixing structure (1) and leave the fixing structure (1) fixed to the part to be repaired, by means of vacuum suction, in order to keep the machining references,
   - Deploy the movable structure (2) on the patch manufacturing bench (22) and fix it through the fixing parts (23, 23', 23", 23"', 30, 30') of the patch manufacturing structure (3),
   - Layup composite layers over either a platform (20) or a mould (24). In case of curved damaged parts, previous to the lay-up of the composite layers, manufacture a resin mould according to the 3D image of the mechanized area through the mould (24) of the patch manufacturing structure (3) and the milling tool and then lay-up the composite layers over the mould,
   - In case of non-curved damaged parts, move the platform (20) with the attaching means (21) through the platform displacement rails (31, 31') from one side of the bench (22) to the opposite side of the bench (22), were the movable structure (2) has been previously fixed through the fixing parts (23, 23', 23", 23"', 30, 30'),
   - Cut the composite layers, with the patch cutting tool (11) previously attached to the tooling support (8) of the movable structure (2), with the same volume as the mechanized area according to the generated 3D image scanned in the removal step, obtaining a patch (28).
4) Move the patch into the mechanized area of the repairing part, as shown in figures 15-19:
   - Remove the movable structure (2) from the bench (22) with the generated patch (28) attached by means of vents of the handle tool (27, 27') attached to the tooling support (8) of the movable structure (2),
   - Attach the movable structure (2) with the patch (28) onto the frame (4) of the fixing structure (1) left attached to the repairing part, and
5) Attach the manufactured patch (28) onto the mechanized area of the composite part to be repaired according to the former milling reference, as shown in figure 20.

## Claims

1. System for out of autoclave bonded repairs **characterized in that** it comprises:
- a fixing structure (1) to the composite damaged area to be repaired, comprising:
∘ a frame (4) and
∘ fixing parts (5, 19) attached to the frame (4),
- a movable structure (2) comprising:
∘ a first routable shaft (6) connected to a first engine (7) configured to rotate the first shaft (6) and attached to two fixing structures
∘ a tooling support (8) attached to the first routable shaft (6) comprising:
▪ a second routable shaft (6') connected to a second engine (7') configured to rotate the second shaft (6') and
▪ either a scanning tool (9), a milling tool (10), a patch cutting tool (11) or a composite patch handle tool (27) attached to the second routable shaft (6'), and
∘ two fixing structures comprising each one two fixing parts linked each other through a third routable shaft connected to a third engine (7") configured to rotate the third shaft (6"); the fixing parts are configured to be attached either to the frame (4) of the fixing structure (1) of the damaged part or to a patch manufacturing structure (3),
so that each three routable shafts (6, 6', 6") are oriented in the three axes X, Y, Z respectively according to the cartesian coordinate system for a three-dimensional space in order to move the tooling (9, 10, 11, 27) in the three axes X, Y and Z,
- a patch manufacturing structure (3) comprising fixing means (23, 23', 23", 23"', 30, 30') for fixing the movable structure (2) to it.

2. The system according to claim 1 wherein the patch manufacturing structure comprises:
∘ a bench (22) comprising platform displacement means (31, 31') able to move the platform (20, 21) from one side to the other of the bench (22),
∘ a platform (20, 21) for laying up composite layers comprising attaching means to the displacement means (31, 31') of the bench (22)

3. The system according to claim 2 wherein the patch manufacturing structure comprises a mould (24) disposed opposite to the platform (20, 21) and displacement mechanisms (26, 26'. 26", 26"') attached to the bench able to move the mould (24) up and down.

4. The system according to claim 3 wherein the mould is a resin mould.

5. The system according to claim 1-4 wherein the scanning tool (9) comprises a dual laser scanner head (12, 13).

6. The system according to claim 1-5 wherein the fixing parts (5, 19) attached to the frame (4) of the fixing structure (1) comprises vents and counterweights.

7. The system according to claim 1 wherein the patch handle tool comprises two vents (27, 27') for handling the patch.

8. Method for removing and restoring damaged part of a composite structure with a system according to claim 1 that comprises the following steps:
- scanning the damaged area,
- removing the scanned damaged area leaving a mechanized area in the composite part to be repaired,
- manufacture a patch equal to the scanned damaged area,
- lay up the patch over the mechanized area.

9. Method according to claim 8 wherein the scanning step comprises the steps of scanning though a scanning tool comprising a dual laser scanner head generating a 3D image of the damaged area.

10. Method according to claims 8 or 9 wherein the step of removing the damaged area comprises the step of removing layers of the damaged area by means of a milling tool generating a mechanized area and generating a new 3D image of the mechanized area.

11. Method according to claim 10 wherein the step of manufacturing the patch comprises layup composite layers over either a platform (20) or a resin mould (24) and cut the composite layers with the same volume as the mechanized area according to the generated 3D image scanned in the removal step, obtaining a patch (28).

12. Method according to claim 11 wherein the step of manufacturing the patch comprises manufacture a resin mould according to the scanned mechanized area and then lay-up the composite layers over the mould.

## Patentansprüche

1. System für geklebte Reparaturen außerhalb des Autoklaven, **dadurch gekennzeichnet, dass** es umfasst:
- eine Befestigungsstruktur (1) für den zu reparierenden beschädigten Bereich des Verbundwerkstoffs, welche umfasst:
∘ einen Rahmen (4) und
∘ Befestigungsteile (5, 19), die am Rahmen (4) angebracht sind,
- eine bewegbare Struktur (2), welche umfasst:
∘ eine erste leitbare Welle (6), die mit einem ersten Motor (7) verbunden ist, der dafür ausgelegt ist, die erste Welle (6) zu drehen, und an zwei Befestigungsstrukturen angebracht ist,
∘ einen Werkzeugträger (8), der an der ersten leitbaren Welle (6) angebracht ist und umfasst:
▪ eine zweite leitbare Welle (6'), die mit einem zweiten Motor (7') verbunden ist, der dafür ausgelegt ist, die zweite Welle (6') zu drehen, und
▪ entweder ein Scanwerkzeug (9), ein Fräswerkzeug (10), ein Patch-Schneidwerkzeug (11) oder ein Handhabungswerkzeug für Verbundwerkstoff-Patches (27), das an der zweiten leitbaren Welle (6') angebracht ist, und
∘ zwei Befestigungsstrukturen, die jeweils zwei Befestigungsteile umfassen, die über eine dritte leitbare Welle (6") miteinander verbunden sind, die mit einem dritten Motor (7") verbunden ist, der dafür ausgelegt ist, die dritte Welle (6") zu drehen; wobei die Befestigungsteile dafür ausgelegt sind, entweder am Rahmen (4) der Befestigungsstruktur (1) für das beschädigte Teil oder an einer Struktur zur Patch-Herstellung (3) angebracht zu werden,
so dass die drei leitbaren Wellen (6, 6', 6") jeweils entlang einer der drei Achsen X, Y, Z gemäß dem Kartesischen Koordinatensystem für einen dreidimensionalen Raum ausgerichtet sind, um das Werkzeug (9, 10, 11, 27) in den drei Achsen X, Y und Z zu bewegen,
- eine Struktur zur Patch-Herstellung (3), die Befestigungsmittel (23, 23', 23", 23"', 30, 30') zum Befestigen der bewegbaren Struktur (2) an ihr umfasst.

2. System nach Anspruch 1, wobei die Struktur zur Patch-Herstellung umfasst:
∘ ein Gestell (22), welches Plattform-Verschiebungsmittel (31, 31') umfasst, die in der Lage sind, die Plattform (20, 21) von einer Seite des Gestells (22) zur anderen zu bewegen,
∘ eine Plattform (20, 21) zum Aufbauen von Verbundschichten, welche Mittel zum Anbringen an den Verschiebungsmitteln (31, 31') des Gestells (22) umfasst.

3. System nach Anspruch 2, wobei die Struktur zur Patch-Herstellung eine Form (24), die gegenüber der Plattform (20, 21) angeordnet ist, und an dem Gestell angebrachte Verschiebungsmechanismen (26, 26', 26", 26"'), die in der Lage sind, die Form (24) nach oben und unten zu bewegen, umfasst.

4. System nach Anspruch 3, wobei die Form eine Kunststoffform ist.

5. System nach Anspruch 1-4, wobei das Scanwerkzeug (9) einen Doppellaser-Scankopf (12, 13) umfasst.

6. System nach Anspruch 1-5, wobei die Befestigungsteile (5, 19), die an dem Rahmen (4) der Befestigungsstruktur (1) angebracht sind, Öffnungen und Gegengewichte umfassen.

7. System nach Anspruch 1, wobei das Handhabungswerkzeug für Patches zwei Öffnungen (27, 27') zum Handhaben des Patches umfasst.

8. Verfahren zum Entfernen und Wiederherstellen eines beschädigten Teils einer Verbundstruktur mit einem System gemäß Anspruch 1, welches die folgenden Schritte umfasst:
- Scannen des beschädigten Bereichs,
- Entfernen des gescannten beschädigten Bereichs, wobei ein mechanisch bearbeiteter Bereich in dem zu reparierenden Verbundteil zurückbleibt,
- Herstellen eines Patches, der dem gescannten beschädigten Bereich entspricht,
- Aufbauen des Patches über dem mechanisch bearbeiteten Bereich.

9. Verfahren nach Anspruch 8, wobei der Schritt des Scannens die Schritte des Scannens durch ein Scanwerkzeug umfasst, das einen Doppellaser-Scankopf umfasst, der ein 3D-Bild des beschädigten Bereichs erzeugt.

10. Verfahren nach Anspruch 8 oder 9, wobei der Schritt des Entfernens des beschädigten Bereichs den Schritt des Entfernens von Schichten des beschädigten Bereichs mittels eines Fräswerkzeugs, das einen mechanisch bearbeiteten Bereich erzeugt, und des Erzeugens eines neuen 3D-Bildes des mechanisch bearbeiteten Bereichs umfasst.

11. Verfahren nach Anspruch 10, wobei der Schritt des Herstellens des Patches das Aufbauen von Verbundschichten über entweder einer Plattform (20) oder einer Kunststoffform (24) und das Zuschneiden der Verbundschichten mit demselben Volumen, wie der mechanisch bearbeitete Bereich gemäß dem erzeugten 3D-Bild, das im Schritt des Entfernens gescannt wurde, umfasst, wobei ein Patch (28) erhalten wird.

12. Verfahren nach Anspruch 11, wobei der Schritt des Herstellens des Patches die Herstellung einer Kunststoffform gemäß dem gescannten mechanisch bearbeiteten Bereich und danach das Aufbauen der Verbundschichten über der Form umfasst.

## Revendications

1. Système pour des réparations liées en dehors d'un autoclave caractérisé en qu'il comprend :
- une structure de fixation (1) à la zone composite endommagée qui doit être réparée, comprenant :
∘ un cadre (4) et
∘ des pièces de fixation (5, 19) fixées au cadre (4),
- une structure mobile (2) comprenant :
∘ un premier arbre rotatif (6) raccordé à un premier moteur (7) configuré pour faire tourner le premier arbre (6) et fixé aux deux structures de fixation ;
∘ un support d'outillage (8) fixé au premier arbre rotatif (6) comprenant :
• un deuxième arbre rotatif (6') raccordé à un deuxième moteur (7') configuré pour faire tourner le deuxième arbre (6') et
• soit un outil de balayage (9), soit un outil de fraisage (10), soit un outil de découpe de pièce rapportée (11), soit un outil de manipulation de pièce rapportée composite (27) fixé au deuxième arbre rotatif (6') et
∘ deux structures de fixation comprenant chacune deux pièces de fixation liées l'une à l'autre au moyen d'un troisième arbre rotatif (6") raccordé à un troisième moteur (7") configuré pour faire tourner le troisième arbre (6") ; les pièces de fixation sont configurées pour être fixées soit au cadre (4) de la structure de fixation (1) de la pièce endommagée, soit à une structure de fabrication de pièce rapportée (3) de telle sorte que chacun des trois arbres rotatifs (6, 6', 6") soit orienté dans les trois axes X, Y, Z respectivement selon le système de coordonnées cartésiennes pour un espace tridimensionnel afin de déplacer l'outillage (9, 10, 11, 27) dans les trois axes X, Y et Z,
- une structure de fabrication de pièce rapportée (3) comprenant des moyens de fixation (23, 23', 23", 23"', 30, 30') pour fixer la structure mobile (2) à ce dernier.

2. Système selon la revendication 1, dans lequel la structure de fabrication de pièce rapportée comprend :
∘ un banc (22) comprenant des moyens de déplacement de plate-forme (31, 31') capables de déplacer la plate-forme (20, 21) d'un côté à l'autre du banc (22),
∘ une plate-forme (20, 21) pour superposer des couches composites comprenant des moyens d'attache aux moyens de déplacement (31, 31') du banc (22).

3. Système selon la revendication 2, dans lequel la structure de fabrication de pièce rapportée comprend un moule (24) disposé à l'opposé de la plate-forme (20, 21) et des mécanismes de déplacement (26, 26', 26", 26"') fixés au banc capables de déplacer le moule (24) vers le haut et vers le bas.

4. Système selon la revendication 3, dans lequel le moule est un moule en résine.

5. Système selon les revendications 1 à 4, dans lequel l'outil de balayage (9) comprend une double tête de scanneur laser (12, 13).

6. Système selon les revendications 1 à 5, dans lequel les pièces de fixation (5, 19) fixées au cadre (4) de la structure de fixation (1) comprennent des évents et des contrepoids.

7. Système selon la revendication 1, dans lequel l'outil de manipulation de pièce rapportée comprend deux évents (27, 27') pour manipuler la pièce rapportée.

8. Procédé pour enlever et restaurer une pièce endommagée d'une structure composite avec un système selon la revendication 1, qui comprend les étapes suivantes consistant :
- à balayer la zone endommagée,
- à retirer la zone endommagée balayée laissant une zone mécanisée dans la pièce composite qui doit être réparée,
- à fabriquer une pièce rapportée égale à la zone endommagée balayée,
- à superposer la pièce rapportée sur la zone mécanisée.

9. Procédé selon la revendication 8, dans lequel l'étape de balayage comprend les étapes de balayage au moyen d'un outil de balayage comprenant une double tête de scanneur laser générant une image 3D de la zone endommagée.

10. Procédé selon la revendication 8 ou 9, dans lequel l'étape de retrait de la zone endommagée comprend l'étape consistant à enlever des couches de la zone endommagée au moyen d'un outil de fraisage générant une zone mécanisée et générant une nouvelle image 3D de la zone mécanisée.

11. Procédé selon la revendication 10, dans lequel l'étape de fabrication de la pièce rapportée consiste à superposer des couches composites soit sur une plate-forme (20), soit sur un moule en résine (24) et à découper les couches composites avec le même volume que la zone mécanisée en fonction de l'image 3D générée balayée au cours de l'étape de retrait, obtenant une pièce rapportée (28) .

12. Procédé selon la revendication 11, dans lequel l'étape de fabrication de la pièce rapportée consiste à fabriquer un moule en résine en fonction de la zone mécanisée balayée et, ensuite, à superposer les couches composites sur le moule.
